# EUROPÄISCHE PATENTANMELDUNG

(11) **EP 1 591 863 A2**
(43) Veröffentlichungstag der Anmeldung: **02.11.2005**
(21) Anmeldenummer: 05002375.3
(22) Anmeldetag: 04.02.2005
(51) Int. Cl.: G06F 1/00

(54) **Pocket-PC mit Zugriffskontrolle**

(30) Priorität: 28.04.2004 DE 102004020701
(71) Anmelder: Fujitsu Siemens Computers GmbH, 80807 München (DE)
(72) Erfinder: Gerstner, Robert, 86438 Kissing (DE); Filimon, Diana, 86368 Gersthofen (DE); Müller, Stephan, 86199 Augsburg (DE); Frolenkow, Konstantin, 86157 Augsburg (DE)
(74) Vertreter: Epping - Hermann - Fischer

(57) **Zusammenfassung**

Die Erfindung beschreibt einen Pocket-PC mit Zugriffskontrolle. Zusätzlich zu einem ersten Mittel zur Zugriffskontrolle (7), das eine Eingabe eines ersten Passwortes (8) vorsieht und im Betriebssystem (6) des Pocket-PCs implementiert ist, ist eine Kaltstartfunktion vorgesehen, bei der vor dem Start des Betriebssystems (6) Operationen eines in einem nichtflüchtigen Speicher (1) gespeicherten BIOS (2) ausgeführt werden, wobei zweite Mittel zur Zugriffskontrolle (3) aktiviert werden. Durch die Erfindung wird ein wirksamer Schutz gegen unberechtigten Zugriff dadurch erreicht, dass das zweite Mittel zur Zugriffskontrolle (3) ausgeführt wird, bevor die Möglichkeit besteht, ein neues Betriebssystem (6) auf den Packet-PC zu übertragen und dadurch das erste Mittel zur Zugriffskontrolle (7) zu umgehen.

## Beschreibung

Die Erfindung betrifft einen Pocket-PC mit Mitteln zur Zugriffskontrolle gemäß dem Oberbegriff von Anspruch 1.

Als Pocket-PC werden kleine tragbare Computer bezeichnet. Alternativ werden sie auch Organizer oder PDA (Personal Digital Assistant) genannt. Sie weisen üblicherweise zwei verschiedene Arten von Speichern auf. Ein nichtflüchtiger Speicher, häufig auf Flash-Technologie beruhend, dient der Speicherung von Betriebssystemen und Programmen. Anwenderdaten werden dagegen in einem flüchtigen Speicher abgelegt, der typischerweise auf CMOS-Basis aufgebaut ist. Auch im so genannten ausgeschalteten Zustand des Pocket-PCs wird dieser flüchtige Speicher weiter mit Strom versorgt, sodass sein Speicherinhalt erhalten bleibt.

Zum Schutz der Daten vor unberechtigtem Zugriff und als Diebstahlsicherung ist bei Pocket-PCs nach dem Stand der Technik eine Authentifizierung über eine Passwort-Eingabe im Betriebssystem als ein erstes Mittel zur Zugriffskontrolle implementiert. Häufig ist dieses Passwort, wie alle Benutzerdaten, im flüchtigen Speicher abgelegt. Unterbrechen der Stromversorgung, z.B. durch zeitweises Entfernen der Batterie, löscht den flüchtigen Speicher, wodurch eine Umgehung der Passwort-Abfrage ermöglicht wird. Das Passwort bietet dann keinen Schutz mehr vor unberechtigter Benutzung des Pocket-PCs. Diese Sicherheitslücke kann geschlossen werden, indem das Passwort im nichtflüchtigen Speicher abgelegt wird. Auch in diesem Fall ist jedoch kein zuverlässiger Diebstahlschutz gegeben. Um Updates des Betriebssystems durchführen zu können, bieten Pocket-PCs während der Boot-Phase die Option, mit Hilfe eines weiteren Computers und einer entsprechenden Verbindung zwischen den beiden Computern ein neues Betriebssystem in den nichtflüchtigen Speicher des Pocket-PCs zu schreiben. Die Boot-Phase kann entweder durch Unterbrechen der Stromversorgung, z.B. durch kurzzeitiges Entfernen der Batterie, durch eine vorgegebene Tastenkombination (Kaltstartfunktion) oder auch mittels eines speziell dafür vorgesehenen Anwenderprogramms initiiert werden.

Es ist daher Aufgabe der Erfindung, einen Pocket-PC zu beschreiben, der auch nach Unterbrechen der Stromversorgung einen zuverlässigen Schutz gegen nicht autorisierten Zugriff bietet.

Diese Aufgabe wird erfindungsgemäß dadurch gelöst, dass bei einem Pocket-PC eine Kaltstartfunktion vorgesehen ist, bei der vor dem Start des Betriebssystems Operationen eines in einem nichtflüchtigen Speicher gespeicherten BIOS ausgeführt werden, wobei zweite Mittel zur Zugriffskontrolle aktiviert werden.

Durch die Erfindung wird ein wirksamer Schutz gegen unberechtigten Zugriff dadurch erreicht, dass das zweite Mittel zur Zugriffskontrolle ausgeführt wird, bevor die Möglichkeit besteht, ein neues Betriebssystem auf den Pocket-PC zu übertragen und dadurch das im Betriebssystem implementierte erste Mittel zur Zugriffskontrolle zu umgehen.

Vorteilhafterweise sieht das zweite Mittel zur Zugriffskontrolle eine Eingabe eines zweiten Passwortes vor. Bei falscher Eingabe des zweiten Passworts wird eine Benutzung des Pocket-PCs verhindert. Weiterhin wird bei falscher Eingabe des zweiten Passworts eine Installation eines Betriebssystems auf dem Pocket-PC verhindert.

Gemäß einer Weiterbildung der Erfindung kann ein drittes Passwort vorgesehen sein, wobei das zweite Mittel zur Zugriffskontrolle bei falscher Eingabe des zweiten und/oder des dritten Passworts die Benutzung des Pocket-PCs verhindert und bei falscher Eingabe des dritten Passworts eine Installation eines Betriebssystems auf dem Pocket-PC verhindert.

Bei mehrfacher falscher Eingabe des zweiten und/oder dritten Passworts kann darüber hinaus eine weitere Benutzung des Pocket-PCs durch eine Sperre verhindert werden, wobei die Sperre nur durch den Hersteller oder vom Hersteller autorisierte Personen aufgehoben werden kann. Sowohl das zweite als auch das dritte Passwort können verschlüsselt hinterlegt sein.

Weitere Einzelheiten und Ausgestaltungen der Erfindung sind in den Unteransprüchen angegeben.

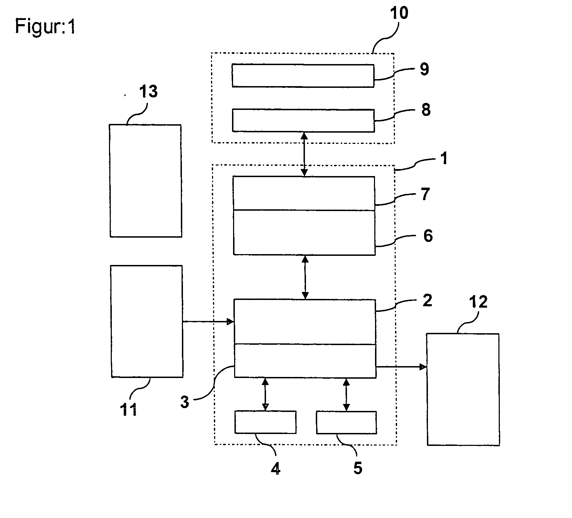

Die Erfindung wird nachfolgend anhand einer Figur näher erläutert. Die Figur zeigt ein Blockschaltbild eines Ausführungsbeispiels der Erfindung.

In einem nichtflüchtigen Speicher 1 befinden sich ein BIOS 2 und als Teil des BIOS 2 ein zweites Mittel zur Zugriffskontrolle 3. Das zweite Mittel zur Zugriffskontrolle 3 hat Zugriff auf ein zweites Passwort 4 und ein drittes Passwort 5, die sich ebenfalls im nichtflüchtigen Speicher 1 befinden. Weiterhin sind im nichtflüchtigen Speicher 1 ein Betriebssystem 6 und als Teil des Betriebssystems 6 erste Mittel zur Zugriffskontrolle 7 gespeichert. Das erste Mittel zur Zugriffskontrolle 7 hat Zugriff auf ein erstes Passwort 8, das wie weitere Benutzerdaten 9 in einem flüchtigen Speicher 10 abgelegt ist. Mit dem BIOS 2 ist eine Tastatur 11 verbunden, und mit dem zweiten Mittel zur Zugriffskontrolle 3 ist eine Stromversorgungssteuerung 12 verbunden. Alle weiteren Funktionseinheiten des Pocket-PCs, wie Bildschirm, Prozessor usw., sind als weitere Komponenten 13 zusammengefasst.

Im normalen Betrieb des Pocket-PCs wird das Betriebssystem 6 und gegebenenfalls Anwenderprogramme ausgeführt. Das Ausschalten des Pocket-PCs geschieht über eine vorgegebene Tastenkombination auf der Tastatur 11, die über das BIOS 2 dem Betriebssystem 6 mitgeteilt wird. Das Betriebssystem 6 suspendiert eventuell laufende Anwendungsprogramme und weist wiederum über das BIOS 2 die Stromversorgungssteuerung 12 an, alle im so genannten ausgeschalteten Zustand nicht benötigten Komponenten stromlos zu schalten. Nach wie vor werden der flüchtige Speicher 10 sowie Einrichtungen zur Überwachung der Tastatur 11 mit Strom versorgt. Dadurch kann eine vorgegebene Tastenkombination zum Einschalten des Geräts auf der Tastatur 11 detektiert werden, die erstens auf die Stromversorgungssteuerung 12 wirkt und zweitens das Betriebssystem 6 wieder startet.

Das Betriebssystem 6 kann so eingerichtet sein, dass bei jedem Start das erste Mittel zur Zugriffskontrolle 7 aktiviert wird, das vom Benutzer die Eingabe eines Passworts zur Authentifizierung verlangt. Das eingegebene Passwort wird mit dem im flüchtigen Speicher 10 hinterlegten ersten Passwort 8 verglichen und entsprechend die Benutzung des Pocket-PCs erlaubt oder verwehrt.

Diese übliche Methode des Einschaltens des Pocket-PCs wird auch als "Warmstart" oder "Softstart" bezeichnet. Im Gegensatz dazu steht die erfindungsgemäße Kaltstartfunktion, die nach Unterbrechen der Stromversorgung oder nach Eingabe einer vorbestimmten Tastenkombination auf der Tastatur 11 ausgeführt wird. Bei dieser Kaltstartfunktion startet das BIOS 2 und aktiviert das zweite Mittel zur Zugriffskontrolle 3. Das zweite Mittel zur Zugriffskontrolle 3 verlangt daraufhin vom Anwender die Eingabe eines Passworts, das mit dem im nichtflüchtigen Speicher 1 hinterlegten zweiten Passwort 4 verglichen wird. Nur bei Übereinstimmung wird daraufhin vom BIOS 2 das Betriebssystem 6 gestartet und so die Benutzung des Pocket-PCs ermöglicht. Stimmen eingegebenes und zweites Passwort 4 nicht überein, weist das zweite Mittel zur Zugriffskontrolle 3 die Stromversorgungssteuerung 12 an, den Pocket-PC wie oben beschrieben auszuschalten. Das Ausschalten des Pocket-PCs über die Stromversorgungssteuerung 12 stellt nur einen beispielhaften Weg da, wie das zweite Mittel zur Zugriffskontrolle 3 die Benutzung des Pocket-PCs bei Eingabe eines falschen Passwortes verhindern kann. Andere Mittel, die das Benutzen des Pocket-PCs verhindern sind ebenso möglich, z.B.: Blockieren der Tastatur, Verhindern des Startens von Betriebssystem oder Anwenderprogrammen, Unterbinden jeglichen Zugriffs auf den Speicher, auch von eventuell angeschlossenen weiteren Computern.

Das zweite Mittel zur Zugriffskontrolle 3 wird aktiviert, noch bevor das BIOS 2 die Option zulässt, mit Hilfe eines weiteren Computers und einer Verbindung zwischen diesem Computer und dem Pocket-PC auf den nichtflüchtigen Speicher 1 oder den flüchtigen Speicher 10 zugreifen zu können und so ein neues Betriebssystem auf dem Pocket-PC zu installieren oder Zugriff auf gespeicherte Daten zu bekommen.

Es ist auch möglich, neben dem zweiten Passwort 4 ein drittes Passwort 5 vorzusehen. Diesen Passwörter können unterschiedlichen Benutzerbefugnisse zugeordnet sein. Beispielsweise ist möglich, über das zweite Passwort 4 zwar die Benutzung des Pocket-PCs zu erlauben, aber jegliche Installationen zu unterbinden, wohingegen das dritte Passwort sowohl die Benutzung des Pocket-PCs als auch die Installation eines neuen Betriebssystems erlaubt. Jegliche Änderungen von zweitem 4 und/oder drittem 5 Passwort sind nur nach erfolgreicher Passworteingabe möglich.

Zusätzlich kann als weiterer Schutz vor unberechtigtem Zugriff der Pocket-PC so eingerichtet sein, dass das zweite Mittel zur Zugriffskontrolle 3 bei mehrfacher falscher Eingabe des zweiten Passworts 4 oder dritten Passworts 5 keine weitere Passwort-Eingabe mehr zulässt und so den Pocket-PC dauerhaft sperrt. Diese Sperre kann so ausgelegt sein, dass nur das Austauschen des nichtflüchtigen Speichers 1 durch den Hersteller oder eine entsprechend autorisierte Person diese Sperre wieder löst. Als weitere Sicherheitsmaßnahme können das zweite 4 und/oder das dritte 5 Passwort verschlüsselt im Speicher hinterlegt sein.

Da vom Benutzer eine Zugriffskontrolle unter Umständen nicht gewünscht ist oder als störend empfunden wird, kann das zweite Mittel zur Zugriffskontrolle 3 so ausgelegt sein, dass der Benutzer dann nicht zur Eingabe eines Passwortes aufgefordert wird, wenn als zweites 4 und/oder drittes 5 Passwort ein Standardpasswort gespeichert ist. Dieses könnte auch die Konfiguration sein, in der der Pocket-PC ausgeliefert wird. Das Standardpasswort kann ein vorgegebenes Passwort sein, das für alle Pocket-PCs einer Bauserie dasselbe ist. Alternativ kann als Standardpasswort ein geräteabhängiges Kennwort eingesetzt werden. Hier kommen solche Kennwörter oder Kennzahlen in Frage, die fest im Pocket-PC eingespeichert sind, wie beispielsweise der UUID (Universal Unique IDentifier) des nichtflüchtigen Speichers 1. Mit solchen UUIDs werden die Speicherbausteine vom Hersteller eindeutig und unveränderbar ausgezeichnet, wobei der UUID auf ähnliche Weise wie der Speicherinhalt aus dem Speicherbaustein ausgelesen werden kann. Das zweite Mittel zur Zugriffskontrolle hat somit auf einfache Weise Zugriff auf den UUID als Standardpasswort, kann das zweite 4 und/oder dritte 5 Passwort mit diesem vergleichen und nur bei Unterschiedlichkeit die Eingabe eines Passwortes durch den Anwender verlangen.

### Bezugszeichenliste

- 1: nichtflüchtiger Speicher
- 2: BIOS
- 3: zweites Mittel zur Zugriffskontrolle
- 4: zweites Passwort
- 5: drittes Passwort
- 6: Betriebssystem
- 7: erstes Mittel zur Zugriffskontrolle
- 8: erstes Passwort
- 9: weitere Benutzerdaten
- 10: flüchtiger Speicher
- 11: Tastatur
- 12: Stromversorgungssteuerung
- 13: weitere Komponenten des Pocket-PCs

## Patentansprüche

1. Pocket-PC mit einem ersten Mittel zur Zugriffskontrolle (7), wobei das erste Mittel zur Zugriffskontrolle (7) eine Eingabe eines ersten Passwortes (8) vorsieht und im Betriebssystem (6) des Pocket-PCs implementiert ist,
**dadurch gekennzeichnet, dass**
eine Kaltstartfunktion vorgesehen ist, bei der vor dem Start des Betriebssystems (6) Operationen eines in einem nichtflüchtigen Speicher (1) gespeicherten BIOS (2) ausgeführt werden, wobei zweite Mittel zur Zugriffskontrolle (3) aktiviert werden.

2. Pocket-PC nach Anspruch 1, **dadurch gekennzeichnet, dass** die Kaltstartfunktion nach Unterbrechung einer Stromversorgung des Pocket-PCs und/oder nach Eingabe einer vorbestimmten Tastenkombination ausgeführt wird.

3. Pocket-PC nach einem der Ansprüche 1 oder 2, **dadurch gekennzeichnet, dass**
das zweite Mittel zur Zugriffskontrolle (3) eine Eingabe eines zweiten Passwortes (4) vorsieht.

4. Pocket-PC nach einem der Ansprüche 1 bis 3, **dadurch gekennzeichnet, dass**
das zweite Mittel zur Zugriffskontrolle (3) bei falscher Eingabe des zweiten Passwortes (4) eine Benutzung des Pocket-PC verhindert.

5. Pocket-PC nach einem der Ansprüche 1 bis 4, **dadurch gekennzeichnet, dass**
das zweite Mittel zur Zugriffskontrolle (3) bei falscher Eingabe des zweiten Passwortes (4) eine Installation des Betriebssystems (6) auf dem Pocket-PC verhindert.

6. Pocket-PC nach einem der Ansprüche 1 oder 2, **dadurch gekennzeichnet, dass**
das zweite Mittel zur Zugriffskontrolle (3) die Eingabe eines zweiten Passwortes (4) oder eines dritten Passwortes (5) vorsieht, wobei das zweite Mittel zur Zugriffskontrolle (3) bei falscher Eingabe des zweiten (4) und/oder dritten (5) Passwortes die Benutzung des Pocket-PC verhindert und das zweite Mittel zur Zugriffskontrolle (3) bei falscher Eingabe des dritten Passwortes (5) eine Installation des Betriebssystems (6) auf dem Pocket-PC verhindert.

7. Pocket-PC nach einem der Ansprüche 3 bis 6, **dadurch gekennzeichnet, dass**
das zweite Mittel zur Zugriffskontrolle (3) bei mehrfacher falscher Eingabe des zweiten (4) und/oder dritten (5) Passwortes eine weitere Benutzung des Pocket-PCs durch eine Sperre verhindert, wobei die Sperre nur durch den Hersteller oder vom Hersteller autorisierte Personen aufgehoben werden kann.

8. Pocket-PC nach einem der Ansprüche 3 bis 7, **dadurch gekennzeichnet, dass**
das zweite (4) und/oder das dritte (5) Passwort verschlüsselt hinterlegt sind.

9. Pocket-PC nach einem der Ansprüche 3 bis 8, **dadurch gekennzeichnet, dass**
ein Standardpasswort vorgesehen ist und das zweite Mittel zur Zugriffskontrolle (3) ohne die Eingabe eines Passwortes die Benutzung des Pocket-PCs zulässt, falls das zweite Passwort (4) gleich dem Standardpasswort ist und/oder das zweite Mittel zur Zugriffskontrolle (3) ohne die Eingabe eines Passwortes die Installation des Betriebssystems (6) auf dem Pocket-PC zulässt, falls das dritte Passwort (5) gleich dem Standardpasswort ist.

10. Pocket-PC nach Anspruch 9, **dadurch gekennzeichnet, dass** als Standardpasswort ein gerätespezifisches Kennwort eingesetzt wird, das unveränderbar im Pocket-PCs gespeichert ist.
